# EUROPEAN PATENT APPLICATION

(11) **EP 0 606 906 A2**
(43) Date of publication of application: **20.07.1994**
(21) Application number: 94100428.5
(22) Date of filing: 13.01.1994
(51) Int. Cl.: G01C 11/02

(54) **Earth observation satellite having picture storing means**

(30) Priority: 15.01.1993 IT MI930043
(71) Applicant: ALCATEL N.V., NL-1077 XX Amsterdam (NL); ALCATEL ITALIA S.p.A., I-20158 Milano (IT)
(72) Inventor: Maggio, Claudio, I-00040 Ardea (Roma) (IT)
(74) Representative: Pohl, Herbert, Dipl.-Ing

(57) **Abstract**

The invention relates to a method of monitoring a geographical area through the use of a satellite, and to a satellite and a control station suitable for operating according to the same.

The monitoring of a geographical area usually is carried out through the use of a satellite that continuously takes pictures of it and transmits them to a control station.

The method of this invention discloses that the satellite takes a sequence of pictures of a geographical area, stores them inside it and transmits only a subset - null in the boundary case - thereof to the control station only with reference to a request from the station itself, in such a way as to achieve a significant reduction in the required transmission capacity.

## Description

The present invention relates to a method of monitoring a geographical area through the use of a satellite, and to a satellite and control station suitable for operating according to the same.

The monitoring of a geographical area usually is carried out through the use of a satellite that continuously takes pictures of it and transmits them to a control station for storing on storage media, printing and processing them; meteorological satellites operate in such way too.

The amount of data to be sent to the control station are increased enormously as the resolution and shooting frequency increase and consequently the transmission capacity necessary for their transmission - meant as product of the band and time of transmission - will be increased too.

Clearly this fact represents a big disadvantage since it involves an increase in the complexity of the communication equipment and the need of obtaining radio beams spatially as concentrated as possible between control station and satellite so as to not interfere with other communications unrelated thereto.

Moreover, when the satellite besides monitoring, carries out the typical functions of telecommunication satellite, the transmission capacity becomes extremely valuable since it has to be shared between monitoring and telephone service.

An indirect limitation in the transmission capacity is necessary also in those instances in which the same control station has to communicate with several satellites because, in these circumstances, it is the "reception" capacity of the control station that will be shared among the various satellites.

On the other hand, in certain situations, only a small amount of all information transmitted to the ground is really useful; in other circumstances what is of interest is the result of the processing of such transmitted information and corresponds to an extremely limited amount of data.

It is an object of the present invention to obtain a very accurate monitoring via satellite with a significant reduction in the transmission capacity necessary for data transmission over the prior art.

This object is achieved through the method of monitoring geographical areas having the characteristics set forth in claim 1, the satellite having the characteristics set forth in claim 8, and the control station having the characteristics set forth in claim 12.

Further advantageous aspects of the present invention are set forth in the subclaims.

If the satellite takes a sequence of pictures of a geographical area, stores them inside it and sends only a subset - null in the boundary case - thereof to the control station only with reference to a request from the station itself, a significant reduction in the required transmission capacity is obtained.

The invention will become more apparent from the following description taken in conjunction with the attached drawings in which:
- Fig. 1 is a schematic overall view of a satellite and control station as disposed with respect to the earth in practice during their operation in monitoring a geographical area both in accordance with the prior art and with the present invention, and
- Fig. 2 is a schematic view of a satellite in accordance with the present invention.

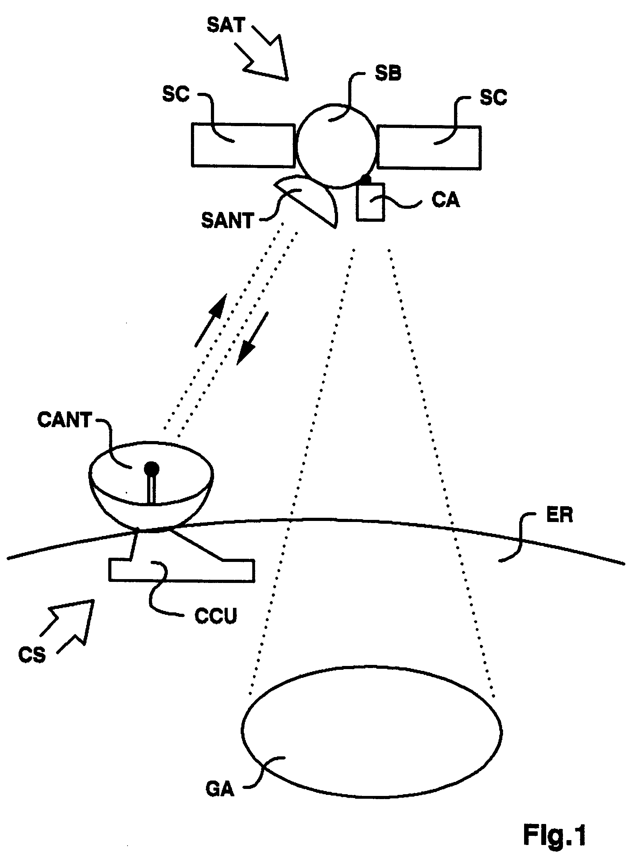

In fig. 1 there are illustrated a control station CS disposed on the ground ER and a space satellite SAT monitoring a geographical area GA.

Satellite SAT comprises a body SB, a satellite antenna system SANT for receiving from and transmitting to the control station CS, a device CA for taking pictures, and means SC for feeding the satellite, generally consisting in solar cells.

The control station CS comprises a station antenna system CANT for receiving from and transmitting to satellite SAT, and a station control unit CCU.

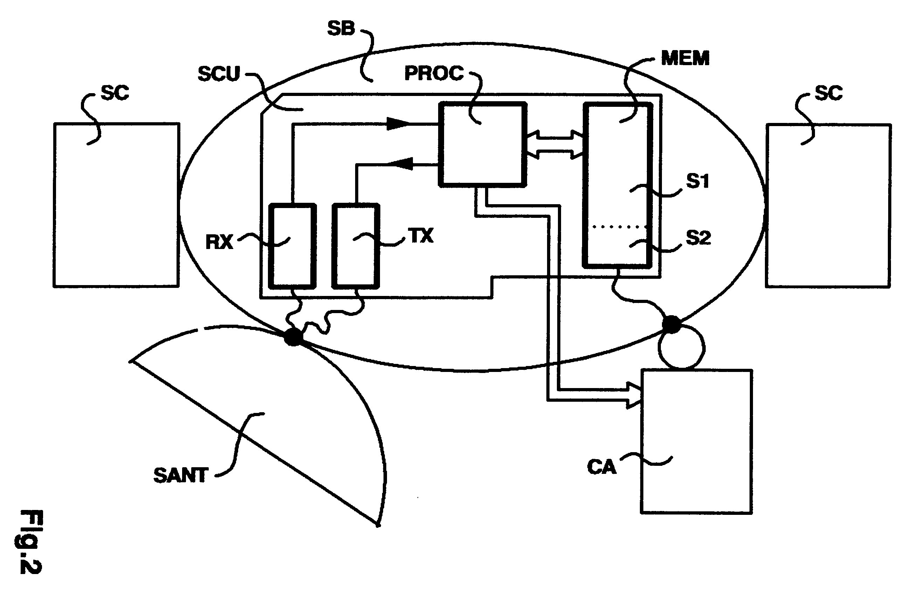

As it may be seen in fig. 2, the satellite in accordance with the present invention includes inside its body SB, a satellite control unit SCU.

The method in accordance with the present invention comprises the steps of:
a) taking a sequence of pictures through the shooting device CA,
b) associating with at least one of such pictures information able to identify them,
c) storing each of such pictures along with such information on a storage device,
d) waiting for the reception of a request for pictures from the control station CS,
e) processing such request checking if among the stored pictures there is any satisfying it, and
f) transmitting a response corresponding to the outcome of such check to the control station CS.
Step b) of the method has the purpose of making it possibly to identify univocally in time and space each picture of the sequence taken during step a): i.e. which geographical area it corresponds to and in which time instant it was taken (e.g. year, month, day, hour, minute and second). It may be enough to associate such a type of information with only one of the pictures taken, e.g. the first one, in the instance in which the geographical area photographed is always the same and the time distance between consecutive pictures of the sequence taken is fixed and predetermined or when the change of geographical area and/or the time distance follow predetermined rules.

The request for pictures from the control station can be more or less sophisticated depending on the level of processing that must be carried out during step e). A very simple request may consist in pictures of a certain geographical area in a certain period of time. A much more complicated request may consist in pictures representing special situations (overstepping limits of certain environmental parameters, presence in a geographical area of predetermined objects, and so on).

The processing to be carried out in step e) depends, as already said, upon the type of received request and may involve very complicated calculations but, in general, it is at least carried out on the basis of information associated with the pictures, unless the request is concerned with all pictures stored on the storage device. It may be contemplated that the request involves the ascertainment of the presence of an image pattern in the pictures; such pattern can be stored in the satellite or can be sent by the control station as integral part of the request.

In step f) the satellite transmits a response corresponding to the outcome of the verification; again, depending on the type of request, such response may change in a substantial manner: it may be simply an affirmative or negative response of the presence of requested picture(s) or, in case of request for pictures which represent special situations, it may consist in data associated with such situations (level of overstepping limits of certain environmental parameters, position of predetermined objects in a geographical area, etc.).
Naturally, such response may consist in the requested picture itself or, in addition to the response in the affirmative, one (or all) of the pictures satisfying the request can be transmitted.
However great the capacity of the storage device may be (for instance a magnetic or optical disc) it will be limited, then the pictures taken after said storage device is completely filled up are stored by overwriting pictures present in said device since a longer time.

In receiving a request, the satellite may receive jointly or separately at least one command and it carries out at least one operation with reference to said received command. Such command may be concerned with several aspects of the satellite operation such as: the application of digital processing algorithms to the taken pictures, the shooting control of the shooting device (position, orientation, coverage angle, take optical frequency range, take rate, resolution, start, end, etc.). Such operation corresponds to one of the single elementary operations that the satellite control unit SCU is able to carry out and therefore, in general, more than one operation to be carried out will correspond to each command.

Naturally it is useful that the satellite is able to receive a set of commands and to carry out different sets of operations depending on the received command, and that said digital processing algorithms, said set of commands, said sets of operations are either pre-stored or programmable by said control station and received by it.

In any case, for supervision reasons from the control station, it may be contemplated that said satellite sends periodically to said station information relative to the executed shootings.

The satellite according to the present invention is now described with reference to fig. 2, at least in those parts concerning the monitoring operation and hence not in all the other aspects, moreover fundamental, well known to engineers skilled in satellites.

Satellite SAT, as illustrated schematically in fig. 2, for monitoring geographical areas comprises a shooting device CA, a satellite receive and transmit antenna system SANT, and a satellite control unit SCU disposed inside the satellite body SB; moreover two groups of solar cells SC are shown in fig. 2.

The satellite control unit SCU comprises:
a) a storage device MEM for receiving shooting data from the shooting device CA,
b) a processor PROC electrically connected to the storage device MEM,
c) a receiver RX for receiving input signals from satellite antenna system SANT and providing process PROC with input data associated with the input signals,
d) a transmitter TX for receiving output data from processor PROC and providing the satellite antenna system SANT with output signals along with output data associated therewith.

The shooting device is very often based upon a semiconductor electronic device called CCD, well known in the art.

Element SANT has been generally called as receive and transmit antenna system to indicate any set of antennas capable of satisfying the communication requirements of any specific satellite, i.e. to include one or more paraboloids and/or one or more dipole antennas.

Depending on the versatility required to the satellite, processor PROC can be realized through wired or programmed logics and, depending on the type and amount of processing to be carried out, it may be composed of several intelligent units connected each other (e.g. one or more microprocessors connected to one or more signal processors type DSP). Naturally, processor PROC can be equipped with an own storage for maintaining the program to be carried out and/or for maintaining data during processings, moreover, it may be electrically connected to the shooting device CA for the shooting control.

The storage device MEM can be formed, e.g., by one or more magnetic and/or optical disks having their control logic (which in turn may include semiconductor memories for temporary storage) associated therewith, and anyway by devices capable of storing large amounts of data as well known in the art of image storing and processing.

More specifically the storage device MEM is formed at least by a first S1 and a second S2 section, the first one S1 being write only connected to the shooting device CA and read only connected to processor PROC, and the second section S2 being read and write connected to processor PROC. Such second section S2 must be fast enough to be ready to receive shooting data at the moment and according to the bit rate characteristic of the shooting device CA. Hence it will be duty of processor PROC to read again data contained in section S2 and transfer them into suitable locations of section S1 eventually after having filtered and/or compressed them; the image compression can be also realized by processor PROC even only during transmission of images toward the control station CS.

Such a satellite obviously may operate either according to a conventional method or to a method in accordance with the present invention; when processor PROC is realized through programmed logics, its operation and consequently the one of the satellite too, are determined by the program contained in the processor PROC itself.

In order to be able to implement the method in accordance with the present invention, it is necessary that also the control station designed to control the satellite through which the shooting occurs is formed and operates in a suitable manner.

The control station, according to the present invention, comprises a station receive and transmit antenna system CANT and a station control unit CCU and is characterized by processing and transmitting a request for pictures to the satellite SAT, and by waiting for the reception of a response to such request from the satellite SAT itself: therefore it does not play only a passive role towards the monitoring but an active role too.

It is natural for such request for pictures to be associated with an interrogation of satellite SAT by a user connected to the station CS. This can be also the case of a computer suitably programmed in such a way that every so often and according to a rule defined in advance it needs an interrogation of the satellite SAT. Such connection can be physical, e.g. through telephone network or a radio link, or purely logic, e.g. when the user is physically in the same place as the station control unit CCU and cooperates with it.

Even if in fig. 2 the control station is shown as a ground station, nothing prevents the station, subject of the present invention, from being itself another satellite or a mobile vehicle.

## Claims

1. Method of monitoring geographical areas through the use of a satellite in communication with at least one control station, said satellite comprising a shooting device, a receive and transmit antenna system for communicating with said control station, and a control unit, said method comprising the steps of:
a) taking a sequence of pictures through said shooting device,
b) associating with at least one of said picture information capable of identifying them,
c) storing each of said pictures along with said information in a storage device,
d) waiting for receipt of a request for pictures from said control station,
e) processing said request checking if among the stored pictures there is at least one that satisfies it, and
f) transmitting to said control station a response corresponding to the outcome of said check.

2. Method according to claim 1, characterized in that in the event of positive outcome, at least one of the pictures that satisfy said request is transmitted.

3. Method according to claim 1, characterized in that pictures taken after said storage device is completely filled up are stored by overwriting the pictures present in said device since a longer time.

4. Method according to claim 1, characterized in that said control unit is capable of receiving at least one command and carrying out at least one operation with reference to said received command.

5. Method according to claim 4, characterized in that said command and said operation are programmable by said control station and are received by it.

6. Method according to claim 4, characterized in that said command concerns the shooting control of said shooting device.

7. Method according to claim 1, characterized in that said satellite periodically transmits to said control station information relative to shootings carried out.

8. Satellite for monitoring geographical areas comprising a shooting device, a receive and transmit antenna system, and a control unit, characterized in that said control unit comprises:
a) a storage device designed to receive shooting data from said shooting device,
b) a processor electrically connected to said storage device,
c) a receiver designed to receive input signals from said antenna system and to provide said processor with input data associated with said input signals,
d) a transmitter designed to receive output data from said processor and to provide said antenna system with output signals along with said output data associated with them.

9. Satellite according to claim 8, characterized in that said storage device is comprised of at least a first and a second sections, said first section being write-only-connected to said shooting device and read-only-connected to said processor, and said second section being read-and-write-connected to said processor.

10. Satellite according to claim 8, characterized in that said processor is electrically connected with said shooting device for controlling the shooting.

11. Satellite as in claim 8, characterized in that it operates in accordance with the method of claims 1 to 7.

12. Control station adapted to control a satellite operating in accordance with the method of claims 1 to 7, including a receive and transmit antenna system and a control unit, characterized by processing and transmitting a request for pictures, and waiting for reception of a response to said request.

13. Control station according to claim 12, characterized in that said request for pictures is processed according to an interrogation of said satellite by a user connected to said station.
